Europäisches Patentamt

European Patent Office

Office européen des brevets

(11) Publication number: **0 391 688**
A1

# EUROPEAN PATENT APPLICATION

(21) Application number: 90303614.3

(51) Int. Cl.⁵: **B67D 5/02, B65D 47/20**

(22) Date of filing: 04.04.90

(30) Priority: 06.04.89 GB 8907814

(43) Date of publication of application:
10.10.90 Bulletin 90/41

(84) Designated Contracting States:
**CH DE ES FR GB IT LI NL SE**

(71) Applicant: **UNILEVER PLC**
**Unilever House Blackfriars**
**London EC4P 4BQ(GB)**

(84) **GB**

Applicant: **UNILEVER NV**

Burgemeester s'Jacobplein 1 P.O. Box 760
**NL-3000 DK Rotterdam(NL)**

(84) **CH DE ES FR IT LI NL SE**

(72) Inventor: **Cregan, Ronald James**
**72 Victoria Road**
**London N4 3SL(GB)**

(74) Representative: **Rogers, John Edward et al**
**UNILEVER PLC Patents Division P.O. Box 68**
**Unilever House**
**London EC4P 4BQ(GB)**

(54) **Liquid dispensing means.**

(57) A liquid dispensing means for a container (1)
comprises a closure (4) fitted to the container (1)
and adapted to allow the passage of liquid thereth-
rough when the internal pressure in the container
exceeds ambient pressure and incorporating a clos-
ing member (14) movable between an open and a
closed position in which positions liquid flow is re-
spectively permitted or prevented and an overcap
(23) operatively engaged with closing member (14)
and removable therefrom only when the closing
member (14) is in the closed position. This overcap
is transparent so that the dispensed dose of liquid in
it can be seen.

A method of introducing liquid detergent into a
washing machine using the dispensing means.

FIG. 1

EP 0 391 688 A1

## LIQUID DISPENSING MEANS

This invention relates to liquid dispensing means and particularly to a method and means for simply and safely dispensing products in doses from a container.

Products that could be harmful, especially in concentrated form, or which are susceptible to contamination eg. by water are preferably not simply poured from an open mouth container after removing a cap. On the one hand there is a danger of spilling and on the other hand there is a danger of contamination by eg. water being able to accidentally enter the open mouth of the container when the cap is removed.

It has been proposed in GB 2 098 958 to provide a permanently fixed valved container closure having a discharge aperture covered by a resilient diaphragm openable in response to internal container pressure and having a closing member movable to a closed position in which contents are prevented from being discharged. An overcap having an integral hook surrounds the container closure in transport and distribution and is fitted to the opposite end of the container by the user to facilitate dispensing the product from the container. In this proposal there is a risk of spillage or contamination of the container contents when the closing member is in the open position.

According to the present invention there is provided liquid dispensing means for a container comprising a closure of the kind that is permanently fixed to a container neck and adapted to allow the passage of liquid therethrough when the internal container pressure exceeds the ambient pressure, a closing member movable between an open position in which increased internal pressure in the container can effect liquid discharge and a closed position in which liquid discharge is prevented, and a removable overcap adapted to surround the closure, characterised in that the overcap is rotatably mounted on the container in operative engagement with the closing member and movable between a locked position in which the overcap is locked to the container and the closing member is in the open position, and a releasable position in which the overcap can be removed from the container and the closing member is in the closed position.

With the overcap locked on the container the closing member is in the open position so that a desired dose of product can be discharged into the overcap by increasing the internal container pressure to open the closure. The overcap is then rotated to the releasable position in which it can be removed from the container thus moving the closing member to the closed position in which the closure is prevented from opening. The overcap together with its contents can be used as required and whilst the overcap is removed from the container the closure remains closed thereby preventing accidental spillage or contamination of the remaining container contents.

Depending upon the amount of product to be dispensed into the overcap it can be convenient for the overcap to be, at least in part, sufficiently transparent for the amount of product therein to be observed without the need for removing the overcap from the container.

The size of the outlet passage through the closure can be adapted relative to the viscosity of the liquid so that the liquid is only discharged when the internal container pressure is increased. The internal container pressure can be increased by a pump device but is preferably achieved by using a flexible container which can be squeezed.

The closure can have an iris mechanism which is opened and closed by movement of the closing member. Thus when the iris mechanism is open contents can be discharged therethrough into the overcap. Alternatively there can be provided one or more holes in the closure and closing member which are moved in and out of alignment to respectively open and close the closure.

Since the closing member can only be in the open position when the overcap is locked in place any leakage which may occur, or discharge which may arise through inadvertent squeezing of the container, is caught by the overcap. Nevertheless, for liquids which are not sufficiently viscous and to provide a more positive cut-off of flow from the closure the closure preferably incorporates a resilient diaphragm sealing the closure and responsive to internal pressure in the container to open the closure.

The overcap can be adapted to serve as a base on which the container can be stood during storage. Thus, particularly when the contents of the container are a viscous liquid, the container can be stored so that the contents are adjacent the closure and can be immediately discharged. It can also be particularly convenient if the closing member provides a foot on which the container can be stood whilst the overcap is removed therefrom. Providing for the container to be stood in either or both of these arrangements can also be convenient if the container does not have a conventional base on which it can stand.

The operative engagement of the overcap with the closing member can be achieved by providing the closing member with a non-circular foot forming skirt, the overcap having a correspondingly shaped plug portion fitting within the skirt to operatively engage the overcap with the closing member. Thus rotation of the overcap relative to the container effects rotation of the closing member to move it between the open position and the closed position.

The closing member can comprise a closure surrounding portion having a dispensing aperture therein, an outwardly extending annular flange having arcuate slots therein and the skirt at its periphery, support arms attached to the closure extending through said slots and carrying lugs which are engagable in bayonet like manner with an inwardly projecting flange on the plug portion of the overcap to lock the overcap to the container.

The bayonet engagment of the lugs with the flange on the plug portion permit the overcap to be removed and replaced only when the closing member is in the closed position. The arcuate slots allow the closing member to rotate relative to the closure between the open and closed positions, at least part of the slots being provided with an opening large enough to allow the closing member to be passed over the lugs and assembled with the closure, conveniently by a snap fit connection therebetween.

The invention also provides a method of introducing a dose of liquid detergent or the like into a washing machine from a flexible container comprising dispensing the required dose of the liquid into a dosing device, placing the dosing device into the washing machine and replacing the device on the container when the washing cycle has been completed characterised in that the container is provided with a closure having the dosing device releasably attachable thereto, rotating the dosing device to a locked position in which it cannot be released from the container and to open the closure, squeezing the container to dose the required quantity of liquid into the dosing device, rotating the dosing device to a releasable position and to close the closure, and removing the dosing device from the container whilst containing the required quantity of liquid to be dosed into the washing machine.

Thus there is provided a clean and efficient method of dispensing and using a liquid detergent. The method is particularly suited to a liquid detergent composition that is susceptible of deterioration when contacted by small amounts of water prior to the washing process since the closure remains in the manually closed position whilst the dosing device or overcap is removed thereby minimising any risk of water entering the container. After the washing process has finished the overcap is retrieved from the washing machine and following any necessary drying to remove water that may remain inside the overcap it is replaced on the container ready to be filled at the next washing process.

The invention will now be described with reference to the accompanying diagrammatic drawings in which:

Figure 1 is an exploded perspective view of a dispensing device according to the invention; and

Figure 2 is a perspective view from below of the overcap of Figure 1; and

Figure 3 is a perspective view from below of the overcap of Figure 1.

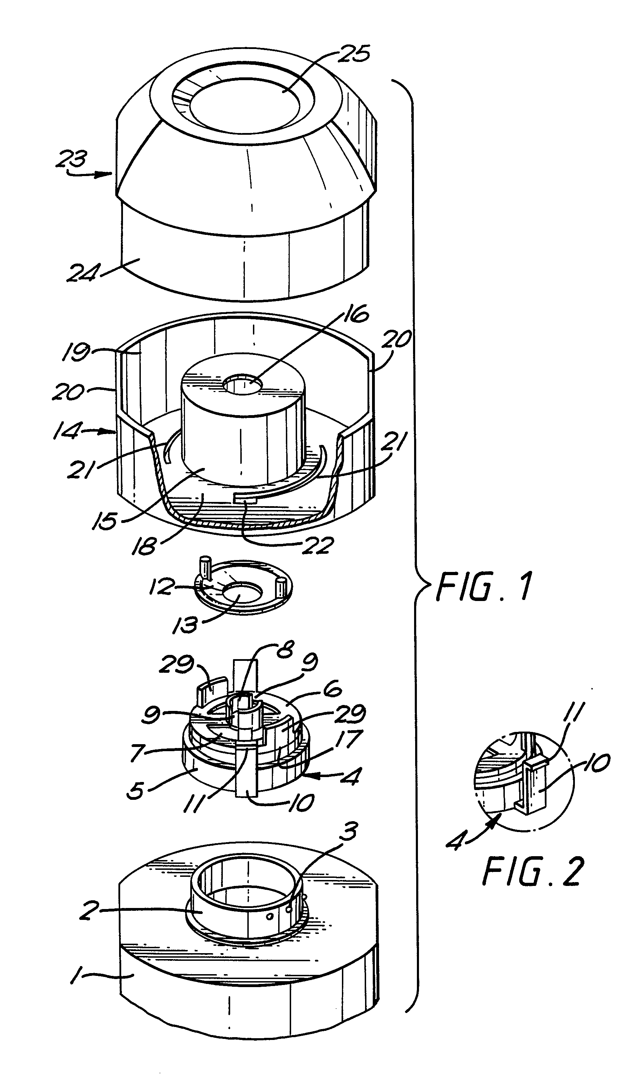

Referring to Figure 1 there is shown part of the top a container 1 having a neck 2 provided with a series of retaining protrusions 3. The closure 4 comprises an annular body 5 having on its inside surface retaining protrusions (not shown) which cooperate with the protrusions 3 to retain the closure in a fixed relative position on the container neck 2.

The top of the closure is formed by an end wall 6 having arcuate openings 7 therethrough and a central upstanding annular collar 8 interrupted by two longitudinal gaps 9.

Extending outwardly from the closure are 'L' shaped support arms 10 one of which is shown more clearly in Figure 2 and which carry at their free ends outwardly extending lugs 11 disposed in a plane above the connection of the support arms with the closure.

A flexible diaphragm 12 has an aperture 13 which allows the diaphragm to pass over the annular collar 8 of the closure.

The diaphragm 12 is retained in position on the closure 4 by a closing member 14 which has a central collar (not shown) within an annular body portion 15 which collar is a sliding fit within the collar 8, gaps in the collar of the closing member having a width narrower than the width of the collar parts 8. The collar on the closing member is hollow and forms an outlet opening 16 in the top of the body portion of the closing member. The closing member is rotatably secured to the closure 4 by an internal annular rib within the body portion 15 (not shown) which engages with an annular groove 17 on the outside of the annular body 5 of the closure 4. A substantially annular flange 18 extends outwardly from the body portion 15 and has at its outer periphery an upstanding skirt 19 which is non-circular in that it is provided with two opposite straight sections 20. The peripheral flange 18 is provided with two arcuate slots 21 each having at one end an opening 22 large enough to allow a lug 11 to pass therethrough.

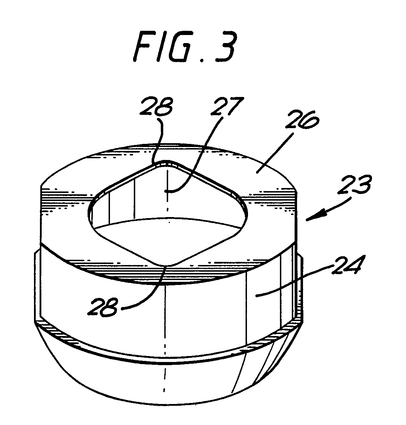

A transparent overcap 23 has a plug portion 24 adapted to be a push fit within the skirt 19 of the closing member, the top of the overcap being recessed at 25. As seen in Figure 3 the underside of the overcap has an inwardly projecting flange 26 surrounding an opening 27 which can pass over the body portion 15 of the closing member, the opening being shaped at 28 to allow the lugs 11 to also pass therethrough.

The closing member 14 is snappingly engaged to the closure with the diaphragm 12 therebetween by aligning the openings 22 in the annular flange 18 with the lugs 11. With the closing member thus engaged with the closure 4 the resilient diaphragm 12 seals the arcuate openings 7 in the closure when the internal pressure in the container is substantially ambient pressure. In the open position of the closing member the gaps 9 in the collar 8 coincide with the gaps in the collar of the closing member. When the internal pressure in the container 1 is increased, eg. by squeezing the container 1, the diaphragm lifts to allow contents to pass through the arcuate openings 7, through the gaps in the collars and out of outlet 16. In the closed position the gaps in the respective collars are closed by the collar parts of the other members to prevent contents being discharged irrespective of the container internal pressure.

Rotation of the closing member 14 relative to the closure is permitted by the support arms 10 moving in the arcuate slots 21. The closing member is permitted to rotate relative to the closure through approximately 90° between the open and closed positions by stop members 29 extending upwardly from the closure 4 which engage with stops (not shown) within the body portion 15 of the closing member.

The overcap 23 can only be mounted on the closing member in one of two relative positions by virtue of the straight sections 20 on the skirt 19. Further, the overcap can only be removed and replaced on the closing member when portions 28 of the openings in the overcap coincide with the lugs 11. When these two conditions are met the closing member is in the closed position, ie. the gaps in the collar of the closing member 14 being aligned with the collar parts 8 of the closure 4. The plug portion 24 of the overcap can then be fully inserted within the skirt 19 of the closing member and rotated together relative to the closure thereby opening the closure. Simultaneously the lugs 11 engage over the flange 26 to lock the overcap in position surrounding the closure and prevent the overcap from being removed.

The container can be stored with the overcap assembled on the closing member and held thereto by the push fit of the plug portion 24 in the skirt 19. In this condition the closing member is in the closed position so that the contents cannot be discharged through the outlet 16 into the overcap. The container can be stood on the overcap with the container uppermost so that the contents of the container are at the container neck 2 adjacent to the closure.

To dispense a required dose of the contents of the container into the overcap the overcap is rotated relative to the container thus rotating the closing member relative to the closure to open the closure by bringing the gaps 9 of the the collar 8 on the closure into alignment with the gaps of the central collar of the closing member. This rotation also serves to lock the overcap to the container by the bayonet - like engagement of the lugs 11 over the flange 26. In this condition a dose of the container contents can be discharged from the container through the closure into the overcap by squeezing the container to increase the internal container pressure and move the flexible diaphragm 12 to open the arcuate openings 7. When the required dose is present in the overcap, as conveniently observed through transparent walls of the overcap, the overcap is rotated to the original position to bring the gaps 9 in the collar 8 of the closure opposite the collar of the closing member to close the closure. The overcap can then be released from the container and the dose used as desired. Whilst using the dose in the overcap the container can be stood on the foot provided by the skirt 19 of the closing member. Whilst the overcap is removed contents cannot be discharged from the container since the closure is closed.

Whilst the invention has been described with reference to a flexible container having a closure incorporating a resilient diaphragm sealing the closure and responsive to internal container pressure to open the closure the invention can also be employed with closures which do not incorporate such pressure operable sealing means. The pressure operable sealing means provides a degree of control over the discharge of a dose of the container contents into the overcap but if the liquid contents are sufficiently viscous the closure can comprise opening and closing means operated by movement of the closing member, eg. an iris or apertures in the closure and closing member which are moved into and out of alignment by movement of the closing member relative to the closure.

The invention also provides a particularly convenient method of dispensing a dose of a liquid detergent composition. Certain such compositions are sensitive to small quantities of water and it is therefore desirable to prevent water entering the container. Thus a dispensing device as described above and shown in the accompanying drawings can be used to dispense a dose of liquid detergent from a container into an overcap, which overcap serves as a dosing device that can be placed directly in the tub of a washing machine to dispense the contents during the washing cycle. During the washing cycle the container can be safely left with the overcap removed without any risk of spillage or water entering the container through the closed closure. Moreover if the container is stood during this time on the foot formed by skirt on the closing member the risk of water being splashed onto the closure is minimised. After the washing cycle has been completed the overcap can be retrieved, dried if necessary, and replaced on the closing member to prevent it being mislaid and to provide additional security against spillage or contamination of the remaining contents of the container.

## Claims

1. Liquid dispensing means for a container comprising a closure of the kind that is permanently fixed to a container neck and adapted to allow the passage of liquid therethrough when the internal container pressure exceeds the ambient pressure, a closing member movable between an open position in which increased internal pressure in the container can effect liquid discharge and a closed position in which liquid discharge is prevented, and a removable overcap adapted to surround the closure, characterised in that the overcap is rotatably mounted on the container in operative engagement with the closing member and movable between a locked position in which the overcap is locked to the container and the closing member is in the open position, and a releasable position in which the overcap can be removed from the container and the closing member is in the closed position.

2. Dispensing means according to claim 1 characterised in that the overcap is transparent.

3. Dispensing means according to claim 1 or claim 2 characterised in that the container is flexible to be squeezed to increase the internal container pressure.

4. Dispensing means according to claim 3 characterised in that the closure incorporates a resilient diaphragm sealing the closure and responsive to internal pressure in the container to open the closure.

5. Dispensing means according to any one of the preceding claims characterised in that the overcap is adapted to serve as a base on which the container can be stood during storage.

6. Dispensing means according to claim 5 characterised in that the closing member provides a foot on which the container can be stood whilst the overcap is removed therefrom.

7. Dispensing means according to any one of the preceding claims in which the closing means is provided with a non-circular foot forming skirt, the overcap having a correspondingly shaped plug portion fitting within the skirt to operatively engage the overcap with the closing member.

8. Dispensing means according to claim 7 characterised in that the closing member comprises a closure surrounding portion having a dispensing aperture therein, an outwardly extending annular flange having the skirt at its periphery and arcuate slots therein, support arms attached to the closure extending through said slots and carrying lugs which are engagable in bayonet like manner with an inwardly projecting flange on the plug portion of the overcap to lock the overcap to the container.

9. A method of introducing a dose of detergent liquid into a washing machine from a flexible container comprising dispensing the required dose of the liquid into a dosing device, placing the dosing device into the washing machine and replacing the device on the container when the washing cycle has been completed characterised in that the container is provided with a closure having the dosing device releasably attachable thereto, rotating the dosing device to a locked position in which it cannot be released from the container and to open the closure, squeezing the container to dose the required quantity of liquid into the dosing device, rotating the dosing device to a releasable position and to close the closure, and removing the dosing device from the container whilst containing the required quantity of liquid to be dosed into the washing machine.

*FIG.1*

*FIG.2*

# FIG . 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,A | GB-A-2 098 958 (MINNETONKA INC.) <br> * Page 2, lines 49-51,57-64,112-117; figures 2,4-7 * | 1 | B 67 D 5/02 <br> B 65 D 47/20 |
| A | US-A-4 474 312 (R.J. DONOGHUE) <br> * Abstract; figure 11 * | 1 | |

**TECHNICAL FIELDS SEARCHED (Int. Cl.5)**

B 67 D
B 65 D
A 47 G
A 47 L

The present search report has been drawn up for all claims

| Place of search | Date of completion of the search | Examiner |
|---|---|---|
| THE HAGUE | 23-07-1990 | VAN DEN BOSSCHE E.J.N. |

EPO FORM 1503 03.82 (P0401)